# EUROPEAN PATENT APPLICATION

(11) **EP 4 671 259 A1**
(43) Date of publication of application: **31.12.2025**
(21) Application number: 24810216.2
(22) Date of filing: 09.05.2024
(51) Int. Cl.: C07F 15/00, C08F 4/80, C08F 10/00

(54) **5,6,7,8-TETRAHYDRO-1-NAPHTHOL-PHOSPHINE POST-TRANSITION METAL COMPLEXES, PREPARATION METHOD THEREFOR, AND USE THEREOF**

(30) Priority: 19.05.2023 CN 202310573961
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: ZHANG, Randi, Beijing 100013 (CN); GAO, Rong, Beijing 100013 (CN); GOU, Qingqiang, Beijing 100013 (CN); ZHENG, Gang, Beijing 100013 (CN); LAI, Jingjing, Beijing 100013 (CN); WANG, Ying, Beijing 100013 (CN); AN, Jingyan, Beijing 100013 (CN); GU, Yuanning, Beijing 100013 (CN)
(74) Representative: Hoffmann Eitle
(86) International application number: PCT/CN2024/091993
(87) International publication number: WO 2024/239969

(57) **Abstract**

The present invention relates to the technical field of olefin polymerization catalysts. Disclosed are 5,6,7,8-tetrahydro-1-naphthol-phosphine post-transition metal complexes, a preparation method therefor, and the use thereof. The structure of the complexes is as shown in formula (I), in which R₇-R₁₁ are selected from hydrogen, halogens, hydroxyl, and substituted or unsubstituted C1-C15 hydrocarbyls, and R₂ and R₃ are selected from halogens, C1-C10 hydrocarbyls, P(R₄)₃, NR₅R₆ and OR₁₂R₁₃, wherein R₄ is selected from substituted or unsubstituted C1-C10 hydrocarbyls, and R₅, R₆, R₁₂ and R₁₃ are selected from C1-C6 hydrocarbyls, or R₅ and R₆ are linked to N to form a five-membered ring or six-membered ring, or R₁₂ and R₁₃ are linked to O to form a five-membered ring or six-membered ring. Said complexes have good thermal stability, have relatively high ethylene polymerization activity at relatively high temperatures, and has a relatively good property of copolymerization with acrylate type monomers, prepared polymers having relatively good properties.

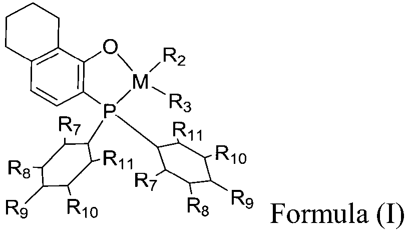

## Description

### CROSS-REFERENCE TO RELATED APPLICATIONS

The application claims the benefit of the China patent application No. "202310573961.0", filed on May 19, 2023, the content of which is specifically and entirely incorporated herein by reference.

### TECHNICAL FIELD

The present invention relates to the technical field of olefin polymerization catalysts, in particular to 5,6,7,8-tetrahydro-1-naphthol-phosphine post-transition metal complexes, a preparation method therefor, and the use thereof.

### BACKGROUND ART

Polyethylene materials are widely used due to the characteristics such as good chemical resistance, low price, simple preparation process, low density and desirable mechanical properties, wherein the post-transition metal catalysts have attracted the widespread attention from the scientific community due to the advantages such as high ethylene homopolymerization activity, desirable resistance to polar groups, and the capability to perform the direct coordination and copolymerization with polar monomers via olefins under the relatively mild conditions (for example, refer to S.D. Ittel, Chem Rev, 2000, 100(4), 1169-1203; H. Mu, Coord Chem Rev, 2021, 435, 213802).

In 1995, Brookhart et al reported that a kind of Ni (II) α-diimine complex, which was capable of polymerizing ethylene with high activity, the developed cationic palladium α-diimine compounds were successfully used in the copolymerization reaction of ethylene or propylene with acrylates, the polar groups in the highly branched copolymers were predominantly located at an end of the chain due to their unique "β-H elimination" and "chain-walking" characteristics (e.g., refer to M. Brookhart, J Am Chem Soc, 1996, 118(1), 267-268); in 2000, Grubbs et al developed a neutral nickel catalyst of salicylaldehyde imine with good heteroatom tolerance such that the copolymerization of ethylene and functionalized norbornenes were implemented to form linear copolymer with a high insertion rate (e.g., refer to R.H. Grubbs, Science, 2000, 287, 460-462); in 2002, Drent et al reported that the neutral palladium complex of electronically asymmetric neutral phosphine sulfonates was another classical catalyst for the homopolymerization/copolymerization of ethylene (e.g., refer to E. Drent, Chem. Commun, 2002, 7, 744-745), which was capable of catalyzing the copolymerization of ethylene with a variety of simple, industrial staple polar monomers (acrylonitrile, vinyl acetate, acrylic acid and acrylates, etc.) to form linear copolymers (e.g., refer to E. Drent, Chem. Commun. 2002, 7, 744-745); in addition, many research groups led by Mecking, Nozaki, Jordon et al had deeply investigated the copolymerization reaction behavior of ethylene and catalytic mechanism initiated by this kind of catalysts, further promoted the development of post-transition metal catalysts.

However, the catalysts have low activity in ethylene polymerization when used at high temperature, the catalysts can neither be directly homopolymerized with ethylene nor be coordinately copolymerized with acrylate, and the preparation method of said catalysts is complicated and requires a high cost.

### SUMMARY OF THE INVENTION

The invention aims to overcome the defect in the prior art with respect to that the catalyst has a low ethylene polymerization activity at a high temperature, and provides a 5,6,7,8-tetrahydro-1-naphthol-phosphine post-transition metal complex, a preparation method therefor, and the use thereof. The 5,6,7,8-tetrahydro-1-naphthol-phosphine post-transition metal complexes have good thermal stability, relatively high ethylene polymerization activity at relatively high temperatures, and a relatively good property of copolymerization with acrylate type monomers, the prepared polymers have desirable properties, such as narrower molecular weight distribution.

In order to achieve the above objects, the first aspect of the invention provides a 5,6,7,8-tetrahydro-1-naphthol-phosphine post-transition metal complex having a structure represented by formula (I), 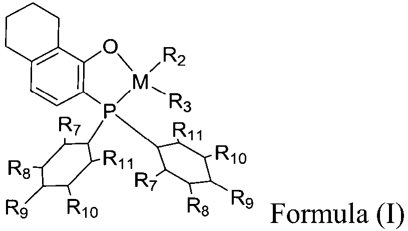
M is selected from group VIII metals, R₇-R₁₁ are each independently selected from hydrogen, halogens, hydroxyl, and substituted or unsubstituted C1-C15 hydrocarbyls; R₂ and R₃ are each independently selected from halogens, C1-C10 hydrocarbyls, P(R₄)₃, NR₅R₆ and OR₁₂R₁₃;
Wherein R₄ is selected from substituted or unsubstituted C1-C10 alkyl and substituted or unsubstituted C6-C10 aryl; R₅ and R₆ are each independently selected from C1-C10 hydrocarbyls, or R₅ and R₆ are linked to N to form a five-membered ring or six-membered ring; R₁₂ and R₁₃ are each independently selected from C1-C10 hydrocarbyls, or R₁₂ and R₁₃ are linked to O to form a five-membered ring or six-membered ring.

The second aspect of the present invention provides a preparation method for the 5,6,7,8-tetrahydro-1-naphthol-phosphine post-transition metal complex, the method comprises the following steps:
(1) Reacting a compound represented by formula (II) with a compound represented by formula (III) to obtain a ligand;
(2) Subjecting the ligand to the reaction with a M metal compound;

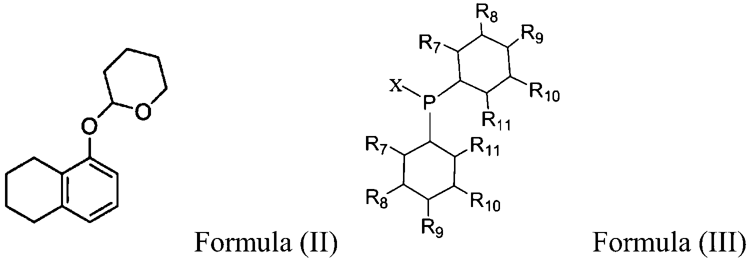

Wherein the metal M in said M metal compound is selected from group VIII metals;
In formula (III), X is halogen; R₇-R₁₁ are each independently selected from hydrogen, halogens, hydroxyl, and substituted or unsubstituted C1-C15 hydrocarbyls; R₂ and R₃ are each independently selected from halogens, C1-C10 hydrocarbyls, P(R₄)₃, NR₅R₆ and OR₁₂R₁₃; wherein R₄ is selected from substituted or unsubstituted C1-C10 alkyl and substituted or unsubstituted C6-C10 aryl; R₅ and R₆ are each independently selected from C1-C10 hydrocarbyls, or R₅ and R₆ are linked to N to form a five-membered ring or six-membered ring; R₁₂ and R₁₃ are each independently selected from C1-C10 hydrocarbyls, or R₁₂ and R₁₃ are linked to O to form a five-membered ring or six-membered ring.

The third aspect of the present invention provides an olefin polymerization process, the process comprises carrying out an olefin polymerization reaction in the presence of 5,6,7,8-tetrahydro-1-naphthol-phosphine post-transition metal complex provided by the invention.

According to the technical scheme of the invention, the 5,6,7,8-tetrahydro-1-naphthol-phosphine post-transition metal complexes have good thermal stability, relatively high ethylene polymerization activity at relatively high temperatures, and a relatively good property of copolymerization with acrylate type monomers, the prepared polymers have desirable properties, such as narrower molecular weight distribution.

Compared with the prior art, the technical scheme of the invention has the following advantages:
(1) The 5,6,7,8-tetrahydro-1-naphthol-phosphine post-transition metal complexes of the invention are synthesized with a simple process, a high yield and a low cost;
(2) The 5,6,7,8-tetrahydro-1-naphthol-phosphine post-transition metal complexes of the invention can catalyze ethylene polymerization with high activity, have relatively high polymerization activity at relatively high polymerization temperature, and can prepare linear polyethylene with adjustable relative molecular mass;
(3) The 5,6,7,8-tetrahydro-1-naphthol-phosphine post-transition metal complexes of the invention have a relatively high property of copolymerization with acrylate type monomers.

### DESCRIPTION OF THE PREFERRED EMBODIMENT

The specific embodiments of the invention will be described in detail below. It should be understood that the specific embodiments described herein merely serve to explain and illustrate the invention, instead of imposing limitations thereto.

The 5,6,7,8-tetrahydro-1-naphthol-phosphine post-transition metal complex has a structural formula as shown by formula (I), 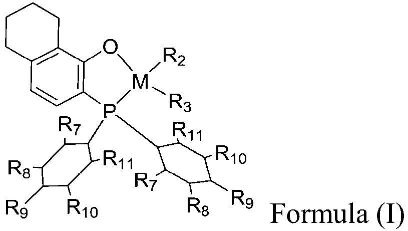
M is selected from group VIII metals, R₇-R₁₁ are each independently selected from hydrogen, halogens, hydroxyl, and substituted or unsubstituted C1-C15 hydrocarbyls; R₂ and R₃ are each independently selected from halogens, C1-C10 hydrocarbyls, P(R₄)₃, NR₅R₆ and OR₁₂R₁₃;
Wherein R₄ is selected from substituted or unsubstituted C1-C10 alkyl and substituted or unsubstituted C6-C10 aryl; R₅ and R₆ are each independently selected from C1-C10 hydrocarbyls, or R₅ and R₆ are linked to N to form a five-membered ring or six-membered ring; R₁₂ and R₁₃ are each independently selected from C1-C10 hydrocarbyls, or R₁₂ and R₁₃ are linked to O to form a five-membered ring or six-membered ring.

In a preferred embodiment, R₇-R₁₁ are each independently selected from hydrogen, halogens, hydroxyl, substituted or unsubstituted C1-C15 alkyl, and substituted or unsubstituted C6-C15 aryl; the substituents are selected from halogen, hydroxyl, C1-C10 alkyl, halogenated C1-C10 alkyl, C1-C10 alkoxy, or halogenated C1-C10 alkoxy.

In a preferred embodiment, M is nickel or palladium.

In a preferred embodiment, R₂ and R₃ are each independently selected from halogens, C1-C8 hydrocarbyls, P(R₄)₃, NR₅R₆ and OR₁₂R₁₃, wherein R₄ is selected from substituted or unsubstituted C1-C10 alkyl and substituted or unsubstituted C6-C10 aryl; R₅ and R₆ are each independently selected from C1-C6 hydrocarbyls, or R₅ and R₆ are linked to N to form a five-membered ring or six-membered ring; R₁₂ and R₁₃ are each independently selected from C1-C6 hydrocarbyls, or R₁₂ and R₁₃ are linked to O to form a five-membered ring or six-membered ring.

In a case of preferably, at least one of R₂ and R₃ is selected from halogen or C1-C10 hydrocarbyl.

In some embodiments, R₂ and R₃ are each independently selected from halogen and C1-C10 hydrocarbyl (e.g., C1-C10 alkyl or C6-C10 aryl).

In other embodiments, R₂ is selected from the group consisting of halogens or C1-C8 hydrocarbyl (e.g., C1-C8 alkyl or C6-C8 aryl), R₃ is selected from P(R₄)₃, NR₅R₆ or OR₁₂R₁₃, wherein R₄ is selected from the group consisting of substituted or unsubstituted C1-C10 alkyl and substituted or unsubstituted C6-C10 aryl; R₅ and R₆ are each independently selected from C1-C6 hydrocarbyls, in addition, R₅ and R₆ are linked to N to form a five-membered ring or six-membered ring; R₁₂ and R₁₃ are each independently selected from C1-C10 hydrocarbyls, moreover, R₁₂ and R₁₃ are linked to O to form a five-membered ring or six-membered ring.

In a case of preferably, when R₂ and R₃ are each independently selected from P(R₄)₃, P(R₄)₃ may be PMe₃, PPh₃ or PEt₃; when R₂ and R₃ are each independently selected from NR₅R₆, NR₅R₆ may be pyridine (C₅H₅N), 2-methylpyridine, 3-methylpyridine, or 4-methylpyridine; when R₂ and R₃ are each independently selected from OR₁₂R₁₃, OR₁₂R₁₃ may be tetrahydrofuran (C₄H₈O), 2-methyl tetrahydrofuran, 3-methyl tetrahydrofuran, 2,5-dimethyl tetrahydrofuran, or 2,2-dimethyl tetrahydrofuran.

As described herein, "Me" refers to methyl, "Ph" refers to phenyl, "Et" refers to ethyl.

In the invention, the expression "substituted" used in the term "substituted or unsubstituted" means that a substituent is contained, wherein the substituent may be selected from the group consisting of halogens, hydroxyl, C1-C6 alkyl, halogenated C1-C6 alkyl, C1-C6 alkoxy, or halogenated C1-C6 alkoxy.

Preferably, the C1-C6 alkyl is selected from methyl, ethyl, n-propyl, isopropyl, n-butyl, isobutyl, n-pentyl, isopentyl, n-hexyl, isohexyl, or 3,3-dimethylbutyl.

In a case of preferably, the C1-C6 alkoxy is selected from methoxy, ethoxy, n-propoxy, isopropoxy, n-butoxy, isobutoxy, n-pentoxy, isopentoxy, n-hexoxy, isohexoxy or 3,3-dimethylbutoxy.

In the invention, the halogens are selected from fluorine, chlorine, bromine or iodine.

In a further preferred embodiment, the 5,6,7,8-tetrahydro-1-naphthol-phosphine post-transition metal complex is selected from the group consisting of the following complexes:
Complex 1: a complex presented by formula (I), wherein M is Ni, R₇-R₁₁ are each H, R₂ is methyl, and R₃ is -NC₅H₅;
Complex 2: a complex presented by formula (I), wherein M is Ni, R₇-R₁₁ are each H, R₂ is phenyl, and R₃ is PMe₃;
Complex 3: a complex presented by formula (I), wherein M is Ni, R₇-R₁₁ are each H, R₂ is Cl, R₃ is -OC₄H₈;
Complex 4: a complex presented by formula (I), wherein M is Ni, R₇-R₁₁ are each H, R₂ is Br, R₃ is -OC₄H₈;
Complex 5: a complex presented by formula (I), wherein M is Ni, R₇, R₉ and R₁₀ are each H, R₈ is methyl, R₁₁ is isopropyl, R₂ is methyl, R₃ is -NC₅H₅;
Complex 6: a complex presented by formula (I), wherein M is Ni, R₇, R₉ and R₁₀ are each H, R₈ is methyl, R₁₁ is isopropyl, R₂ is phenyl, R₃ is PMe₃;
Complex 7: a complex presented by formula (I), wherein M is Ni, R₇, R₉ and R₁₀ are each H, R₈ is methyl, R₁₁ is isopropyl, R₂ is Cl, R₃ is -OC₄H₈;
Complex 8: a complex presented by formula (I), wherein M is Ni, R₇, R₉ and R₁₀ are each H, R₈ is methyl, R₁₁ is isopropyl, R₂ is Br, R₃ is -OC₄H₈;
Complex 9: a complex presented by formula (I), wherein M is Pd, R₇-R₁₁ are each H, R₂ is methyl, and R₃ is -NC₅H₅;
Complex 10: a complex presented by formula (I), wherein M is Pd, R₇-R₁₁ are each H, R₂ is Cl, R₃ is PMe₃;
Complex 11: a complex presented by formula (I), wherein M is Pd, R₇, R₉ and R₁₀ are each H, R₈ is methyl, R₁₁ is isopropyl, R₂ is methyl, R₃ is -NC₅H₅;
Complex 12: a complex presented by formula (I), wherein M is Pd, R₇, R₉ and R₁₀ are each H, R₈ is methyl, R₁₁ is isopropyl, R₂ is Cl, R₃ is PMe₃.

The preparation method for the 5,6,7,8-tetrahydro-1-naphthol-phosphine post-transition metal complex may comprise the following steps:
(1) Reacting a compound represented by formula (II) with a compound represented by formula (III) to obtain a ligand represented by the following formula (IV);
(2) Subjecting the ligand to the reaction with a M metal compound;

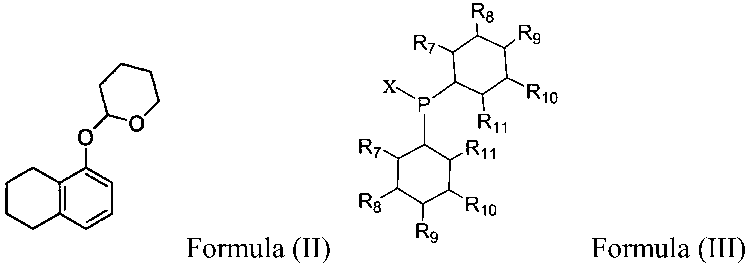

In formula (III), X is halogen, which may be preferably, for example, chlorine or bromine, most preferably chlorine.

In formula (III), R₇-R₁₁ are defined in the same manner as in the preceding text.

In the method of the present invention, the metal M in said M metal compound is selected from group VIII metals, preferably nickel or palladium.

In a preferred embodiment, the M metal compound is one or more selected from the group consisting of nickel dimethyl bipyridine (Py₂NiMe₂), nickel bis(1,5-cyclooctadiene) (Ni(COD)₂), nickel dichloro tetrapyridine (Ni₂Cl₂Py₄), ethylene glycol dimethyl ether nickel bromide ((DME)NiBr₂), ethylene glycol dimethyl ether nickel chloride ((DME)NiCl₂), nickel dichloro-bis(trimethyl phosphine) (NiCl₂(PMe₃)₂), nickel bis(pyridine) bis[(trimethylsilyl)methyl] (Ni(Py)₂(CH₂SiMe₃)₂), (phenyl) (N,N,N',N'-tetramethyl-1,2-ethanediamine) nickel bromide (NiArBr(TMEDA)), nickel dibenzyl dipyridine (Ni(CH₂Ph)₂Py₂), phenyl (trimethyl phosphine) nickel bromide (NiPhBr(PMe₃)₂, phenyl (triethyl phosphine) nickel chloride (NiPhCl(PEt₃)₂), nickel diphenyl bis (trimethyl phosphine) (NiPh₂(PMe₃)₂), nickel dichloro-bis(trimethyl phosphine) (NiCl₂(PMe₃)₂), palladium dimethyl bipyridine (Pd(Me)₂Py₂), palladium dichloro-bipyridine (PdCl₂Py₂), palladium bis(pyridine) bis[(trimethylsilyl)methyl] (Pd(Py)₂(CH₂SiMe₃)₂), palladium dibenzyl dipyridine (Pd(CH₂Ph)₂Py₂), methyl-1,5-cyclooctadiene-palladium chloride (Pd(COD)ClMe), and palladium dimethyl(N,N,N',N'-tetramethyl-1,2-ethanediamine) ((TMEDA)PdMe₂).

In the method of the present invention, the reaction process of step (1) is shown in the following reaction formula,

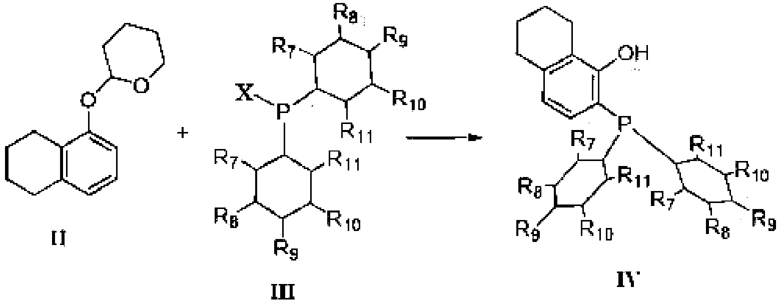

Wherein X and R₇-R₁₁ are defined in the same manner as in the preceding text.

In the method of the present invention, the reaction process of step (2) is shown in the following reaction formula,

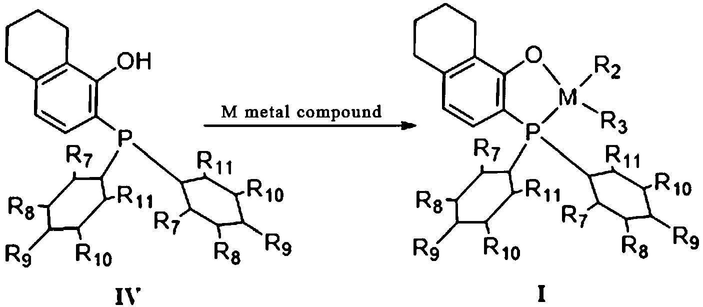

Wherein M, R₂, R₃, R₇-R₁₁ are defined in the same manner as in the preceding text.

In a preferred embodiment, the reaction of step (1) is implemented in the presence of a solvent. In a specific example, the solvent may be diethyl ether.

In a preferred embodiment, the reaction of step (2) is performed in the presence of a reaction solvent. In a specific example, the reaction solvent may be toluene or tetrahydrofuran.

In a preferred embodiment, the molar ratio of said M metal compound to said ligand in step (2) is within the range of (1.1-1.3) : 1.

In a specific embodiment, the preparation process of step (1) comprises the following steps: dissolving a compound represented by formula (II) in anhydrous ether in an atmosphere of protective gas (e.g., nitrogen gas), dropwise adding n-BuLi (n-butyl lithium) solution at the temperature of -78°C, and gradually returning to room temperature after the reaction; subsequently, dropwise adding an anhydrous ether solution (ice-water bath) of the compound represented by formula (III), gradually raising the temperature to room temperature, stirring the materials and carrying out the reaction overnight. Quenching with water, extracting the organic phase with anhydrous ether, concentrating the obtained organic phase, freezing for cyclic deoxygenation, adding 15mL concentrated hydrochloric acid under nitrogen atmosphere for reaction, tracking the completion of the reaction by using a thin layer chromatography (TLC), then adding an aqueous NaHCO₃ solution for neutralization, quenching with water, extracting the organic phase with anhydrous ether, drying with anhydrous MgSO₄, filtering, concentrating, and performing a column chromatography to obtain a ligand represented by formula (IV).

In a specific embodiment, the preparation process of step (2) comprises the following steps: dissolving the ligand obtained in step (1) and the M metal compound respectively in a reaction solvent (e.g., toluene, tetrahydrofuran) in an atmosphere of protective gas (such as nitrogen gas), stirring and mixing the ligand solution and the solution of the M metal compound, performing the reaction at room temperature for 8-10h, filtering, concentrating the filtrate, adding heptane, and recrystallizing to prepare the 5,6,7,8-tetrahydro-1-naphthol-phosphine post-transition metal complex of the invention.

The invention also provides an olefin polymerization process, the process comprises carrying out an olefin polymerization reaction in the presence of 5,6,7,8-tetrahydro-1-naphthol-phosphine post-transition metal complex provided by the invention.

In the olefin polymerization process of the invention, the olefin polymerization reaction may be homopolymerization or copolymerization.

In some embodiments, the polymerized monomer is ethylene. In the embodiment, the olefin polymerization reaction is the homopolymerization of ethylene.

In other embodiments, the polymerized monomers comprise ethylene and α-olefin. In the embodiment, the olefin polymerization is a copolymerization reaction. The α-olefin may be C3-C16 α-olefin, in particular, it may be selected from, but not limited to, at least one of propylene, butene, pentene, hexene, octene and 4-methylpentene-1. As an alternative embodiment, the α-olefin may carry one or more polar functional groups, which may be, for example, hydroxyl, carboxyl, ester.

In other embodiments, the polymerization monomers comprise ethylene and acrylate type monomers. In this embodiment, the olefin polymerization reaction is a copolymerization reaction. The acrylate type monomers are represented by the general formula CH₂=C(R₃₁)CO₂(R₃₂), wherein R₃₁ may be H or C1-C10 hydrocarbyls, which may contain branched chains, rings and/or unsaturated bonds; R₃₂ may be C1-C30 hydrocarbyls, which may contain branched chains, rings and/or unsaturated bonds, and R₃₂ can contain a heteroatom at any position therein.

When the number of carbon atoms of R₃₁ is 11 or more, the group is inclined to exhibit less polymerization activity. Therefore, R₃₁ is H or C1-C10 hydrocarbyl. Preferably, R₃₁ is H or a C1-C5 hydrocarbyl. More preferably, R₃₁ is H or methyl.

Similarly, when the number of carbon atoms of R₃₂ is more than 30, the group tends to exhibit less polymerization activity. Therefore, R₃₂ has 1-30, preferably 1-12, and more preferably 1-8 carbon atoms.

Further, the heteroatom optionally contained in R₃₂ may be selected from oxygen, sulfur, selenium, phosphorus, nitrogen, silicon, fluorine, boron and the like. Among these heteroatoms, oxygen, silicon and fluorine are preferable, and oxygen is more preferable. Furthermore, R₃₂ without containing a heteroatom is also preferable.

Further preferably, the specific examples of the acrylate type monomers include, but are not limited to methyl (meth) acrylate, ethyl (meth) acrylate, n-propyl (meth) acrylate, isopropyl (meth) acrylate, n-butyl (meth) acrylate, isobutyl (meth) acrylate, t-butyl (meth) acrylate, amyl (meth) acrylate, hexyl (meth) acrylate, cyclohexyl (meth) acrylate, octyl (meth) acrylate, 2-ethylhexyl (meth) acrylate, nonyl (meth) acrylate, decyl (meth) acrylate, dodecyl (meth) acrylate, phenyl (meth) acrylate, toluoyl (meth) acrylate, benzyl (meth) acrylate, hydroxyethyl (meth) acrylate, dimethyl aminoethyl (meth) acrylate, diethyl aminoethyl (meth) acrylate, 2-aminoethyl (meth) acrylate, 2-methoxyethyl (meth) acrylate, 3-methoxy propyl (meth) acrylate, glycidyl (meth) acrylate, oxirane (meth) acrylate, trifluoro methyl (meth) acrylate, 2-trifluoro methyl ethyl (meth) acrylate, perfluoro ethyl (meth) acrylate, (meth) acrylamide, methacryl dimethyl amide, 2-hydroxy butyl (meth) acrylate, 4-hydroxy butyl (meth) acrylate, and the like. The acrylate type monomers may be used alone or in a combination thereof.

In the olefin polymerization process of the present invention, the temperature of the olefin polymerization reaction may be from -78°C to 200°C, preferably from -20°C to 150°C. The 5,6,7,8-tetrahydro-1-naphthol-phosphine post-transition metal complexes have relatively high polymerization activity at high temperature, thus the olefin polymerization process is particularly suitable for the olefin polymerization reaction at high temperature. In some embodiments, the olefin polymerization reaction temperature is within the range of 30-100°C, preferably within the range of 70-100°C.

In the olefin polymerization process of the present invention, the polymerization pressure of the olefin polymerization reaction may be within the range of 0.01-10MPa, preferably within the range of 0.01-5MPa.

In the olefin polymerization process of the invention, the polymerization reaction time of the olefin polymerization reaction may be within the range of 5-60min.

In the present invention, the term "polymerization pressure" refers to the pressure of ethylene in the polymerization system, it is expressed by the absolute pressure.

In the olefin polymerization process of the invention, the polymerization of the polymerization monomers is carried out in a solvent. The polymerization solvent may be one or more selected from the group consisting of alkanes, aromatic hydrocarbons and halogenated hydrocarbons. Preferably, the polymerization solvent is one or more selected from the group consisting of hexane, pentane, heptane, benzene, toluene, dichloromethane, chloroform and dichloroethane, more preferably one or more of hexane, toluene and heptane.

In the present invention, alkyl refers to straight chain alkyl, branched chain alkyl or cycloalkyl, including but not limited to methyl, ethyl, n-propyl, isopropyl, n-butyl, sec-butyl, isobutyl, tert-butyl, n-pentyl, isopentyl, tert-pentyl, neopentyl, n-hexyl, n-heptyl, n-octyl, n-decyl, cyclopropyl, cyclopentyl, cyclohexyl, 4-methylcyclohexyl, 4-ethylcyclohexyl, 4-n-propyl cyclohexyl and 4-n-butyl cyclohexyl.

In the present invention, examples of aryl include, but are not limited to phenyl, 4-methylphenyl, 4-ethylphenyl, dimethylphenyl and vinylphenyl.

In the invention, alkenyl refers to straight chain alkenyl, branched chain alkenyl or cycloalkenyl, including but not limited to vinyl, allyl, and butenyl.

In the present invention, examples of the aralkyl include, but are not limited to phenylmethyl, phenylethyl, phenyl-n-propyl, phenyl-isopropyl, phenyl-n-butyl and phenyl-tert-butyl.

In the present invention, examples of alkaryl include, but are not limited to tolyl, ethylphenyl, n-propylphenyl, isopropylphenyl, n-butylphenyl and tert-butylphenyl groups.

The 5,6,7,8-tetrahydro-1-naphthol-phosphine post-transition metal complexes, a preparation method therefor, and the use thereof according to the invention are further illustrated below with reference to examples, the examples are carried out under the premise of the technical scheme of the invention, and give the detailed embodiments and specific operational process, but the protection scopes of the invention are not limited to the following examples.

Unless otherwise specified in the invention, the experimental methods in the following examples were conventional methods in the art; unless otherwise specified in the invention, the experimental materials used in the following examples were commercially available.

The analytical characterization instruments and test methods used in the following examples and comparative examples were as follows:
(1) Nuclear magnetic resonance spectrometer: Avance III HD 500 (500 MHz), with Tetramethylsilicon (TMS) as an internal standard;
(2) Molecular weight and molecular weight distribution PDI (PDI = Mw/Mn) of polymers: the indicators were measured by using PL-GPC220 chromatograph with a solvent of trichlorobenzene at 150°C (wherein the standard sample was PS, the flow rate was 1.0mL/min, the chromatographic column was 3×PLgel 10µm M1×ED-B, 300 ×7.5nm);
(3) Activity measurement method: the polymers were washed with hydrochloric acid ethanol solution, and subjected to drying in vacuum to obtain the weight of polymers; the calculation method of the polymerization activity was as follows: polymers weight (g)/metal (mol) ×60/polymerization time (min);
(4) Analysis of comonomer content of polymers: the comonomer content was analyzed and tested by ¹H NMR, ¹³C NMR spectroscopy on a 400MHz Bruker Avance 400 NMR spectrometer by using a 10mm PASEX 13 probe at 120°C and dissolving the polymer sample with 1,2,4-trichlorobenzene.

### Example 1

Complex 1: a complex presented by formula (I), wherein M was Ni, R₇-R₁₁ were each H, R₂ was methyl, and R₃ was -NC₅H₅.

In a nitrogen atmosphere, the compound represented by formula (II) (2.32g, 10mmol) was dissolved in anhydrous ether (20mL), n-butyllithium solution (2.7M, 4.0mL, 11mmol) was dropwise added at -78°C, the reaction temperature was gradually returned to room temperature, continuously stirred for 12h, a white precipitate was obtained; dicyclohexylphosphine chloride (10mmol, 2.32g) was uniformly dispersed in 10mL of anhydrous ether, dropwise added into the original reaction system in an ice water bath, slowly heated to room temperature, stirred overnight, quenched with water, an organic phase was extracted by the anhydrous ether, the obtained organic phase was concentrated, freezed for cyclic deoxygenation, 5mL of concentrated hydrochloric acid was added in the nitrogen atmosphere to carry out the reaction for 5h, the reaction was tracked by TLC, after completion of the reaction, an aqueous NaHCO₃ solution was added for neutralization, quenched with water, the organic phase was extracted by anhydrous ether, subjected to drying with anhydrous MgSO₄, filtering, concentrating, and performing column chromatography, a ligand L₁ was obtained, the yield was 31%. ¹H NMR (500 MHz, CDCl₃, TMS): δ 11.65 (s, 0.9H), 6.72-6.68 (m, 1H), 6.58-6.56 (m, 1H), 2.74-2.72 (t, J = 5.8 Hz, 2H), 2.65-2.63 (t, J = 6.3 Hz, 2H), 2.06-1.96 (m, 4H), 1.86-1.68 (m, 12H), 1.45-1.13 (m, 10H). ¹³C NMR (126 MHz, CDCl₃) δ 163.26, 143.18, 143.16, 126.63, 126.58, 125.86, 125.79, 119.39, 119.30, 104.10, 103.39, 77.28, 77.03, 76.77, 36.01, 35.49, 29.98, 26.41, 26.31, 26.27, 26.17, 25.76, 29.29, 25.25, 24.10, 24.08, 22.78, 22.59, 22.54, ³¹P NMR (202 MHz, CDCl₃) δ 60.52.

In a nitrogen atmosphere, ligand L₁ (0.517g, 1.5mmol) and metallic nickel source (Py₂NiMe₂) (0.366g, 1.5mmol) were dissolved in toluene (10 mL) respectively, the ligand solution was then dropwise added into the metallic nickel source solution, stirred vigorously, reacted at room temperature for 10h, filtered to obtain a pale brown solution, the solvent was concentrated, and frozen at -30°C for crystallization, a complex 1 was obtained with a yield of 72%. ³¹P NMR (202 MHz, CDCl₃). δ 60.61. C₂₈H₄₀NNiOP was subjected to the elemental analysis and test: the theoretical calculation values were as follows: C, 67.76; H, 8.12; N, 2.82; the test values were as follows: C, 67.45; H, 8.42; N, 2.67.

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 5.0mg (10µmol) of complex 1 was added, an ethylene pressure of 10atm was maintained at the temperature of 70°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

### Example 2

Complex 1: a complex presented by formula (I), wherein M was Ni, R₇-R₁₁ were each H, R₂ was methyl, and R₃ was -NC₅H₅.

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 5.0mg (10µmol) of complex 1 was added, an ethylene pressure of 10atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

### Example 3

Complex 1: a complex presented by formula (I), wherein M was Ni, R₇-R₁₁ were each H, R₂ was methyl, and R₃ was -NC₅H₅.

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 5.0mg (10µmol) of complex 1 was added, an ethylene pressure of 10atm was maintained at the temperature of 100°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

### Example 4

Complex 1: a complex presented by formula (I), wherein M was Ni, R₇-R₁₁ were each H, R₂ was methyl, and R₃ was -NC₅H₅.

100mL stainless steel polymeric kettle equipped with a mechanical stirrer was continuously dried at 130°C for 6 hours, vacuumized while the kettle was still hot, the air in said kettle was replaced with N₂ gas for 3 times, 50mL of toluene and 0.45mL (5 mmol) of methyl acrylate were injected into the polymeric kettle, 5.0mg (10µmol) of complex 1 was added, an ethylene pressure of 15atm was maintained at the temperature of 70°C, the materials were vigorously stirred and subjected to the reaction for 60min, neutralized with a hydrochloric acid-acidified ethanol solution having a concentration of 10wt%, an ethylene-acrylate copolymer was obtained, the polymer was dried and weighed to test the polymerization activity, and the test data of weight average molecular weight, molecular weight distribution, polymerization activity and comonomer content of the prepared polymer were as shown in Table 1.

### Example 5

Complex 1: a complex presented by formula (I), wherein M was Ni, R₇-R₁₁ were each H, R₂ was methyl, and R₃ was -NC₅H₅.

100mL stainless steel polymeric kettle equipped with a mechanical stirrer was continuously dried at 130°C for 6 hours, vacuumized while the kettle was still hot, the air in said kettle was replaced with N₂ gas for 3 times, 50mL of toluene and 0.72mL (5mmol) of butyl acrylate were injected into the polymeric kettle, 5.0mg (10µmol) of complex 1 was added, an ethylene pressure of 15atm was maintained at the temperature of 70°C, the materials were vigorously stirred and subjected to the reaction for 60min, neutralized with a hydrochloric acid-acidified ethanol solution having a concentration of 10wt%, an ethylene-acrylate copolymer was obtained, the polymer was dried and weighed to test the polymerization activity, and the test data of weight average molecular weight, molecular weight distribution, polymerization activity and comonomer content of the prepared polymer were as shown in Table 1.

### Example 6

Complex 4: a complex presented by formula (I), wherein M was Ni, R₇-R₁₁ were each H, R₂ was Br, and R₃ was -OC₄H₈.

Ligand L₁ was prepared according to the method in Example 1.

In a nitrogen atmosphere, ligand L₁(0.688g, 2mmol) was dissolved in tetrahydrofuran, excess NaH (0.072g, 3mmol) was added, stirred at room temperature for 10h, NaH was removed by filtration, a tetrahydrofuran solution of metallic nickel source (DME) NiBr₂ (0.617g, 2mmol) was dropwise added, the reaction was carried out at room temperature overnight, the solvent was drained, dichloromethane (40mL) was added for dissolution, the filtering was performed, the filter cake was removed, and the filtrate was concentrated, heptane was added for recrystallization, a complex 4 was obtained with a yield of 72%. C₂₆H₄₀BrNiO₂P was subjected to the elemental analysis and test: the theoretical calculation values were as follows: C, 56.35, H, 7.28; the test values were as follows: C, 56.74; H, 7.41.

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 5.5mg (10µmol) of complex 4 was added, an ethylene pressure of 10atm was maintained at the temperature of 30°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

### Example 7

Complex 4: a complex presented by formula (I), wherein M was Ni, R₇-R₁₁ were each H, R₂ was Br, and R₃ was -OC₄H₈.

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 5.5mg (10µmol) of complex 4 was added, an ethylene pressure of 10atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

### Example 8

Complex 4: a complex presented by formula (I), wherein M was Ni, R₇-R₁₁ were each H, R₂ was Br, and R₃ was -OC₄H₈.

100mL stainless steel polymeric kettle equipped with a mechanical stirrer was continuously dried at 130°C for 6 hours, vacuumized while the kettle was still hot, the air in said kettle was replaced with N₂ gas for 3 times, 50mL of toluene and 0.45mL (5mmol) of methyl acrylate were injected into the polymeric kettle, 5.5mg (10µmol) of complex 4 was added, an ethylene pressure of 15atm was maintained at the temperature of 70°C, the materials were vigorously stirred and subjected to the reaction for 60min, neutralized with a hydrochloric acid-acidified ethanol solution having a concentration of 10wt%, an ethylene-acrylate copolymer was obtained, the polymer was dried and weighed to test the polymerization activity, and the test data of weight average molecular weight, molecular weight distribution, polymerization activity and comonomer content of the prepared polymer were as shown in Table 1.

### Example 9

Complex 11: a complex presented by formula (I), wherein M was Pd, R₇-R₁₁ were each H, R₂ was methyl, and R₃ was -NC₅H₅.

Ligand L₁ was prepared according to the method in Example 1.

In a nitrogen atmosphere, ligand L₁(0.688g, 2mmol) was dissolved in toluene (20mL), and metallic palladium source (TMEDA) PdMe₂ (0.51g, 2mmol) was dissolved in toluene solution (15mL), the ligand solution was then dropwise added into the metallic palladium source solution, the materials were stirred vigorously, the reaction was performed at room temperature for 5h, 0.6mL pyridine was added, and then reacted overnight, filtered to obtain a black solution, the solvent was removed in vacuum to obtain a complex 11 with a yield of 77%, C₂₈H₄₀NOPPd was subjected to the elemental analysis and test: the theoretical calculation values were as follows: C, 61.82; H, 7.41; N, 2.57; the test values were as follows: C, 62.03; H, 7.58; N, 2.36;

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 5.4mg (10µmol) of complex 11 was added, 40umol B(C₆F₅)₃ was further added; an ethylene pressure of 10atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

### Comparative Example 1

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 5.0mL of methylaluminoxane (MAO) (toluene solution with a concentration of 1.53mol/L) was further added, 5.1mg (10µmol) of complex A (Chem Cat Chem 2022, 14, e202101736) was added, an ethylene pressure of 10atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

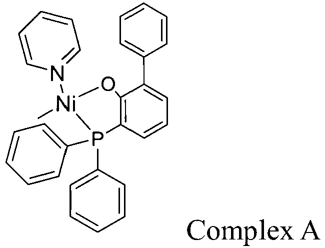

### Comparative Example 2

100mL stainless steel polymeric kettle equipped with a mechanical stirrer was continuously dried at 130°C for 6 hours, vacuumized while the kettle was still hot, the air in said kettle was replaced with N₂ gas for 3 times, 50mL of toluene and 0.45mL (5mmol) of methyl acrylate were injected into the polymeric kettle, 5.1mg (10µmol) of complex A was added, an ethylene pressure of 15atm was maintained at the temperature of 70°C, the materials were vigorously stirred and subjected to the reaction for 60min, neutralized with a hydrochloric acid-acidified ethanol solution having a concentration of 10wt%, an ethylene-acrylate copolymer was obtained, the polymer was dried and weighed to test the polymerization activity, and the test data of weight average molecular weight, molecular weight distribution, polymerization activity and comonomer content of the prepared polymer were as shown in Table 1.

### Comparative Example 3

Complex B was prepared according to the method disclosed in the patent application CN102197040A.

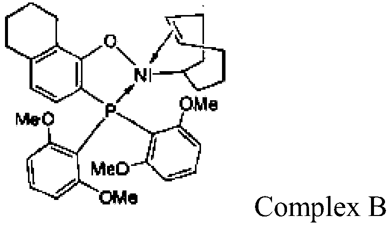

1L stainless steel polymeric kettle equipped with a mechanical stirrer was continuously dried at 130°C for 6 hours, vacuumized while the kettle was still hot, the air in said kettle was replaced with N₂ gas for 3 times, 500mL of toluene was injected into the polymeric kettle, 6.2mg (10µmol) of complex B was added; an ethylene pressure of 10atm was maintained at the temperature of 80°C, the materials were vigorously stirred and subjected to the reaction for 30min, neutralized with a hydrochloric acid-acidified ethanol solution having a concentration of 10wt%, polyethylene was obtained, the polymer was dried and weighed to test the polymerization activity, and the test data of weight average molecular weight, molecular weight distribution, polymerization activity and comonomer content of the prepared polymer were as shown in Table 1.

**Table 1**

| Examples | Complexes | Polymerizat ion activity (g/mol·h) | M_{w}×10⁻⁴ | M_{w}/Mₙ | Content of copolymerizatio n monomer (mol%) |
|---|---|---|---|---|---|
| Example 1 | Complex 1 | 7.1×10⁶ | 3.8 | 2.0 | - |
| Example 2 | Complex 1 | 6.8×10⁶ | 2.1 | 2.1 | - |
| Example 3 | Complex 1 | 2.9×10⁶ | 0.97 | 1.8 | - |
| Example 4 | Complex 1 | 3.1×10⁵ | 3.0 | 2.0 | 3.5 |
| Example 5 | Complex 1 | 2.0×10⁵ | 2.8 | 2.1 | 3.1 |
| Example 6 | Complex 4 | 3.8×10⁶ | 26.7 | 2.1 | - |
| Example 7 | Complex 4 | 2.0×10⁶ | 10.8 | 2.2 | - |
| Example 8 | Complex 4 | 2.1×10⁵ | 7.9 | 2.1 | 2.9 |
| Example 9 | Complex 11 | 4.8×10⁶ | 2.7 | 1.8 | - |
| Comparativ e Example 1 | Complex A | 1.5×10⁶ | 0.7 | 2.4 | - |
| Comparativ e Example 2 | Complex A | 3.2×10⁴ | 0.35 | 2.2 | 2.4 |
| Comparativ e Example 3 | Complex B | 1.6×10⁶ | 1.5 | 2.5 | - |

As illustrated by Table 1, the 5,6,7,8-tetrahydro-1-naphthol-phosphine post-transition metal complexes in the invention have relatively high polymerization activity at relatively high temperatures, and the prepared polymers have desirable properties. In particular, the comparison results between Examples 1-3, 6-7, 9 and Comparative Examples 1, 3 demonstrate that the complexes in the present invention have the significantly higher ethylene polymerization activity, and the prepared polyethylene has an obviously higher molecular weight and a significantly narrower molecular weight distribution; as can be seen from the comparison results between Examples 4-5, 8 and Comparative Example 2, the complexes prepared according to the present invention have the significantly higher copolymerization activity with acrylate type monomers, and the prepared copolymers has an obviously higher molecular weight and a significantly narrower molecular weight distribution.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A 5,6,7,8-tetrahydro-1-naphthol-phosphine post-transition metal complex, is **characterized in that** the complex has a structure represented by formula (I), 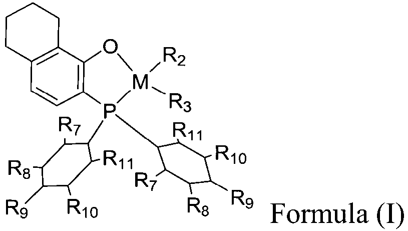
M is selected from group VIII metals, R₇-R₁₁ are each independently selected from hydrogen, halogens, hydroxyl, and substituted or unsubstituted C1-C15 hydrocarbyls; R₂ and R₃ are each independently selected from halogens, C1-C10 hydrocarbyls, P(R₄)₃, NR₅R₆ and OR₁₂R₁₃;
wherein R₄ is selected from substituted or unsubstituted C1-C10 alkyl and substituted or unsubstituted C6-C10 aryl; R₅ and R₆ are each independently selected from C1-C10 hydrocarbyls, or R₅ and R₆ are linked to N to form a five-membered ring or six-membered ring; R₁₂ and R₁₃ are each independently selected from C1-C10 hydrocarbyls, or R₁₂ and R₁₃ are linked to O to form a five-membered ring or six-membered ring.

2. The 5,6,7,8-tetrahydro-1-naphthol-phosphine post-transition metal complex according to claim 1, wherein M is nickel or palladium.

3. The 5,6,7,8-tetrahydro-1-naphthol-phosphine post-transition metal complex according to claim 1 or 2, wherein R₇-R₁₁ are each independently selected from hydrogen, halogens, hydroxyl, substituted or unsubstituted C1-C15 alkyl, and substituted or unsubstituted C6-C15 aryl; the substituents are selected from halogen, hydroxyl, C1-C10 alkyl, halogenated C1-C10 alkyl, C1-C10 alkoxy, or halogenated C1-C10 alkoxy.

4. The 5,6,7,8-tetrahydro-1-naphthol-phosphine post-transition metal complex according to any one of claims 1-3, wherein R₂ and R₃ are each independently selected from halogens, C1-C8 hydrocarbyls, P(R₄)₃, NR₅R₆ and OR₁₂R₁₃, wherein R₄ is selected from substituted or unsubstituted C1-C10 alkyl and substituted or unsubstituted C6-C10 aryl; R₅ and R₆ are each independently selected from C1-C6 hydrocarbyls, or R₅ and R₆ are linked to N to form a five-membered ring or six-membered ring; R₁₂ and R₁₃ are each independently selected from C1-C6 hydrocarbyls, or R₁₂ and R₁₃ are linked to O to form a five-membered ring or six-membered ring.

5. The 5,6,7,8-tetrahydro-1-naphthol-phosphine post-transition metal complex according to any one of claims 1-4, wherein the complex is selected from the group consisting of the following complexes:
Complex 1: a complex presented by formula (I), wherein M is Ni, R₇-R₁₁ are each H, R₂ is methyl, and R₃ is -NC₅H₅;
Complex 2: a complex presented by formula (I), wherein M is Ni, R₇-R₁₁ are each H, R₂ is phenyl, and R₃ is PMe₃;
Complex 3: a complex presented by formula (I), wherein M is Ni, R₇-R₁₁ are each H, R₂ is Cl, R₃ is -OC₄H₈;
Complex 4: a complex presented by formula (I), wherein M is Ni, R₇-R₁₁ are each H, R₂ is Br, R₃ is -OC₄H₈;
Complex 5: a complex presented by formula (I), wherein M is Ni, R₇, R₉ and R₁₀ are each H, R₈ is methyl, R₁₁ is isopropyl, R₂ is methyl, R₃ is -NC₅H₅;
Complex 6: a complex presented by formula (I), wherein M is Ni, R₇, R₉ and R₁₀ are each H, R₈ is methyl, R₁₁ is isopropyl, R₂ is phenyl, R₃ is PMe₃;
Complex 7: a complex presented by formula (I), wherein M is Ni, R₇, R₉ and R₁₀ are each H, R₈ is methyl, R₁₁ is isopropyl, R₂ is Cl, R₃ is -OC₄H₈;
Complex 8: a complex presented by formula (I), wherein M is Ni, R₇, R₉ and R₁₀ are each H, R₈ is methyl, R₁₁ is isopropyl, R₂ is Br, R₃ is -OC₄H₈;
Complex 9: a complex presented by formula (I), wherein M is Pd, R₇-R₁₁ are each H, R₂ is methyl, and R₃ is -NC₅H₅;
Complex 10: a complex presented by formula (I), wherein M is Pd, R₇-R₁₁ are each H, R₂ is Cl, R₃ is PMe₃;
Complex 11: a complex presented by formula (I), wherein M is Pd, R₇, R₉ and R₁₀ are each H, R₈ is methyl, R₁₁ is isopropyl, R₂ is methyl, R₃ is -NC₅H₅;
Complex 12: a complex presented by formula (I), wherein M is Pd, R₇, R₉ and R₁₀ are each H, R₈ is methyl, R₁₁ is isopropyl, R₂ is Cl, R₃ is PMe₃.

6. A preparation method for the 5,6,7,8-tetrahydro-1-naphthol-phosphine post-transition metal complex, is **characterized in that** the method comprises the following steps:
(1) reacting a compound represented by formula (II) with a compound represented by formula (III) to obtain a ligand;
(2) subjecting the ligand to the reaction with a M metal compound; 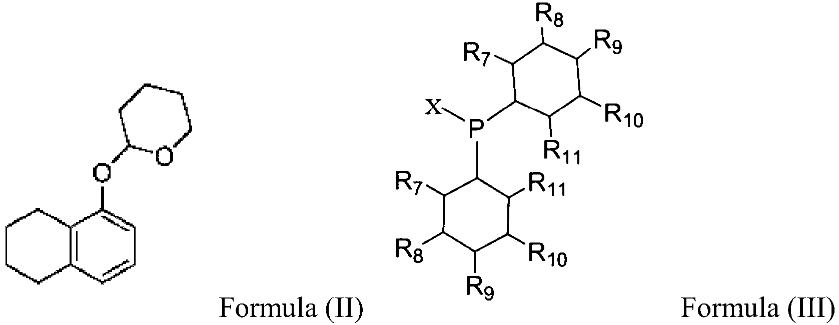
Wherein the metal M in said M metal compound is selected from group VIII metals;
in formula (III), X is halogen; R₇-R₁₁ are each independently selected from hydrogen, halogens, hydroxyl, and substituted or unsubstituted C1-C15 hydrocarbyls; R₂ and R₃ are each independently selected from halogens, C1-C10 hydrocarbyls, P(R₄)₃, NR₅R₆ and OR₁₂R₁₃; wherein R₄ is selected from substituted or unsubstituted C1-C10 alkyl and substituted or unsubstituted C6-C10 aryl; R₅ and R₆ are each independently selected from C1-C10 hydrocarbyls, or R₅ and R₆ are linked to N to form a five-membered ring or six-membered ring; R₁₂ and R₁₃ are each independently selected from C1-C10 hydrocarbyls, or R₁₂ and R₁₃ are linked to O to form a five-membered ring or six-membered ring.

7. The method according to claim 6, wherein the metal M is nickel or palladium.

8. The method according to claim 7, wherein the M metal compound is one or more selected from the group consisting of nickel dimethyl bipyridine, nickel bis(1,5-cyclooctadiene), nickel dichloro tetrapyridine, ethylene glycol dimethyl ether nickel bromide, ethylene glycol dimethyl ether nickel chloride, nickel dichloro-bis(trimethyl phosphine), nickel bis(pyridine) bis[(trimethylsilyl)methyl], (phenyl) (N,N,N',N'-tetramethyl-1,2-ethanediamine) nickel bromide, nickel dibenzyl dipyridine, phenyl (trimethyl phosphine) nickel bromide, phenyl (triethyl phosphine) nickel chloride, nickel diphenyl bis (trimethyl phosphine), nickel dichloro-bis(trimethyl phosphine), palladium dimethyl bipyridine, palladium dichloro-bipyridine, palladium bis(pyridine) bis[(trimethylsilyl)methyl], palladium dibenzyl dipyridine, methyl-1,5-cyclooctadiene-palladium chloride, and palladium dimethyl(N,N,N',N'-tetramethyl-1,2-ethanediamine).

9. The method according to any one of claims 6-8, wherein the reaction of step (2) is performed in the presence of a reaction solvent, which is toluene and/or tetrahydrofuran.

10. An olefin polymerization process, is **characterized in that** the process comprises carrying out an olefin polymerization reaction in the presence of 5,6,7,8-tetrahydro-1-naphthol-phosphine post-transition metal complex according to any one of claims 1-5.

11. The process according to claim 10, wherein the olefin polymerization reaction is homopolymerization or copolymerization.

12. The process according to claim 10 or 11, wherein the polymerization monomer is ethylene.

13. The process according to claim 10 or 11, wherein the polymerization monomers comprise ethylene and α-olefin.

14. The process according to claim 10 or 11, wherein the polymerization monomers comprise ethylene and acrylate type monomer.

15. The process according to claim 14, wherein the acrylate type monomer is at least one selected from the group consisting of methyl (meth) acrylate, ethyl (meth) acrylate, n-propyl (meth) acrylate, isopropyl (meth) acrylate, n-butyl (meth) acrylate, isobutyl (meth) acrylate, t-butyl (meth) acrylate, amyl (meth) acrylate, hexyl (meth) acrylate, cyclohexyl (meth) acrylate, octyl (meth) acrylate, 2-ethylhexyl (meth) acrylate, nonyl (meth) acrylate, decyl (meth) acrylate, dodecyl (meth) acrylate, phenyl (meth) acrylate, toluoyl (meth) acrylate, benzyl (meth) acrylate, hydroxyethyl (meth) acrylate, dimethyl aminoethyl (meth) acrylate, diethyl aminoethyl (meth) acrylate, 2-aminoethyl (meth) acrylate, 2-methoxyethyl (meth) acrylate, 3-methoxy propyl (meth) acrylate, glycidyl (meth) acrylate, oxirane (meth) acrylate, trifluoro methyl (meth) acrylate, 2-trifluoro methyl ethyl (meth) acrylate, perfluoro ethyl (meth) acrylate, (meth) acrylamide, methacryl dimethyl amide, 2-hydroxy butyl (meth) acrylate, and 4-hydroxy butyl (meth) acrylate.

16. The process according to any one of claims 10-15, **characterized in that** the olefin polymerization reaction temperature is within the range of 30-100°C.
